# EUROPEAN PATENT APPLICATION

(11) **EP 4 567 733 A1**
(43) Date of publication of application: **11.06.2025**
(21) Application number: 24215822.8
(22) Date of filing: 27.11.2024
(51) Int. Cl.: G06T 7/73

(54) **APPARATUS, METHOD, AND SYSTEM FOR GENERATING A SEMANTIC THREE-DIMENSIONAL ABSTRACT REPRESENTATION**

(30) Priority: 08.12.2023 US 202318533323
(71) Applicant: Nokia Solutions and Networks Oy, 02610 Espoo (FI)
(72) Inventor: HUANG, Howard, New York (US); SURIANARAYANAN, Bharath, Jersey City (US)
(74) Representative: Nokia EPO representatives

(57) **Abstract**

An approach is provided for generating a semantic three-dimensional abstract representation. The approach involves, for example, processing a first image to determine a first set of image coordinates corresponding to one or more first semantic features of one or more first objects. The approach also involves processing a second image to determine a second set of image coordinates corresponding to one or more second semantic features of one or more second objects. The approach further involves determining an object size, an object pose, or a combination thereof based on the first set of image coordinates, the second set of image coordinates, and a camera pose change between the first image and the second image. The approach further involves providing the object size, the object pose, or a combination thereof as an output.

## Description

### TECHNICAL FIELD

The various example embodiments described herein generally relate to generating digital representations of objects.

### BACKGROUND

In industrial automation applications, a digital representation of objects (e.g. machines, assets, workers, autonomous agents), including sensors and actuators, enables the measurement and modeling of processes in the physical environment. This representation, sometimes known as a *digital twin,* can be used to optimize environment-wide processes and enable use cases such as path planning, asset management, and general state monitoring. However, there are significant technical challenges with creating such representations.

### SOME EXAMPLE EMBODIMENTS

Therefore, there is a need for generating semantic three-dimensional abstract representations of objects.

According to one example embodiment, an apparatus comprises at least one processor, and at least one memory storing instructions that, when executed by the at least one processor, cause the apparatus at least to process an image captured by a camera device equipped on a mobile agent to process a first image to determine a first set of image coordinates corresponding to one or more first semantic features of one or more first objects. The apparatus is also caused to process a second image to determine a second set of image coordinates corresponding to one or more second semantic features of one or more second objects. The apparatus is further caused to determine an object size, an object pose, or a combination thereof based on the first set of image coordinates, the second set of image coordinates, and a camera pose change between the first image and the second image. The apparatus is further caused to provide the object size, the object pose, or a combination thereof as an output.

According to another example embodiment, a method comprises processing a first image to determine a first set of image coordinates corresponding to one or more first semantic features of one or more first objects. The method also comprises processing a second image to determine a second set of image coordinates corresponding to one or more second semantic features of one or more second objects. The method further comprises determining an object size, an object pose, or a combination thereof based on the first set of image coordinates, the second set of image coordinates, and a camera pose change between the first image and the second image. The method further comprises providing the object size, the object pose, or a combination thereof as an output.

According to another example embodiment, a non-transitory computer-readable storage medium comprising program instructions that, when executed by an apparatus, cause the apparatus to process a first image to determine a first set of image coordinates corresponding to one or more first semantic features of one or more first objects. The apparatus is also caused to process a second image to determine a second set of image coordinates corresponding to one or more second semantic features of one or more second objects. The apparatus is further caused to determine an object size, an object pose, or a combination thereof based on the first set of image coordinates, the second set of image coordinates, and a camera pose change between the first image and the second image. The apparatus is further caused to provide the object size, the object pose, or a combination thereof as an output.

According to another example embodiment, a computer program comprising instructions which, when executed by an apparatus, cause the apparatus to process a first image to determine a first set of image coordinates corresponding to one or more first semantic features of one or more first objects. The apparatus is also caused to process a second image to determine a second set of image coordinates corresponding to one or more second semantic features of one or more second objects. The apparatus is further caused to determine an object size, an object pose, or a combination thereof based on the first set of image coordinates, the second set of image coordinates, and a camera pose change between the first image and the second image. The apparatus is further caused to provide the object size, the object pose, or a combination thereof as an output.

According to another example embodiment, an apparatus comprises means for processing a first image to determine a first set of image coordinates corresponding to one or more first semantic features of one or more first objects. The apparatus also comprises means for processing a second image to determine a second set of image coordinates corresponding to one or more second semantic features of one or more second objects. The apparatus further comprises means for determining an object size, an object pose, or a combination thereof based on the first set of image coordinates, the second set of image coordinates, and a camera pose change between the first image and the second image. The apparatus further comprises means for providing the object size, the object pose, or a combination thereof as an output.

According to one example embodiment, an apparatus comprises image processing circuitry configured to perform processing a first image to determine a first set of image coordinates corresponding to one or more first semantic features of one or more first objects. The image processing circuitry is also configured to perform processing a second image to determine a second set of image coordinates corresponding to one or more second semantic features of one or more second objects. The apparatus further comprises localization circuitry configured to perform determining an object size, an object pose, or a combination thereof based on the first set of image coordinates, the second set of image coordinates, and a camera pose change between the first image and the second image. The apparatus further comprises output circuitry configured to perform providing the object size, the object pose, or a combination thereof as an output.

According to one example embodiment, a system comprises one or more devices including one or more of a cloud server device, an edge device, an internet of things (IoT) device, a user equipment device, or a combination thereof. The one or more devices are configured to process a first image to determine a first set of image coordinates corresponding to one or more first semantic features of one or more first objects. The one or more devices are also configured to process a second image to determine a second set of image coordinates corresponding to one or more second semantic features of one or more second objects. The one or more devices are further configured to determine an object size, an object pose, or a combination thereof based on the first set of image coordinates, the second set of image coordinates, and a camera pose change between the first image and the second image. The one or more devices are further configured to provide the object size, the object pose, or a combination thereof as an output.

According to a further embodiment, a device (e.g., a mobile agent or component thereof) comprises at least one processor; and at least one memory including a computer program code for one or more programs, the at least one memory and the computer program code configured to, with the at least one processor, cause the device to

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

According to some aspects, there is provided the subject matter of the independent claims. Some further aspects are defined in the dependent claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The example embodiments of the invention are illustrated by way of examples, and not by way of limitation, in the figures of the accompanying drawings:
FIG. 1 is a diagram capable of generating a semantic three-dimensional abstract representation of objects, according to one example embodiment;
FIG. 2 is an example of an image segmentation output for generating a semantic three-dimensional abstract representation of objects, according to one example embodiment;
FIG. 3 is a flowchart of a process for generating a semantic three-dimensional abstract representation of objects, according to one example embodiment;
FIG. 4 is a diagram of an example of geometric verification for generating a semantic three-dimensional abstract representation of objects, according to one example embodiment;
FIG. 5 is a diagram using semantic three-dimensional abstract representations of objects for initial mapping, according to one example embodiment;
FIG. 6 is a diagram using semantic three-dimensional abstract representations of objects for augmenting maps, according to one example embodiment;
FIG. 7 is a diagram illustrating a process for creating a digital twin from a semantic three-dimensional abstract representation of objects, according to one example embodiment;
FIG. 8 is a diagram illustrating an example of using a drone to map objects in an environment, according to one example embodiment;
FIG. 9A is a diagram of providing structure-aided visual localization (SAVLoc), according to one example embodiment;
FIG. 9B is a diagram of providing SAVLoc based on optional visual-inertial odometry, according to one example embodiment;
FIG. 9C is a diagram of providing SAVLoc based on optional visual odometry, according to one example embodiment;
FIG. 10A is a diagram of a SAVLoc implementation in a server, according to one example embodiment;
FIG. 10B is a diagram of a SAVLoc implementation on a device, according to one example embodiment;
FIG. 11 is a diagram of hardware that can be used to implement example embodiments; and
FIG. 12 is a diagram of a chip set that can be used to implement example embodiments.

### DESCRIPTION OF SOME EMBODIMENTS

Examples of apparatus, methods, and computer programs for generating a semantic abstract representation of objects, according to one example embodiment, are disclosed in the following. In the following description, for the purposes of explanation, numerous specific details and examples are set forth to provide a thorough understanding of the embodiments of the invention. It is apparent, however, to one skilled in the art that the embodiments of the invention may be practiced without these specific details or with an equivalent arrangement. In other instances, structures and devices are shown in block diagram form to avoid unnecessarily obscuring the embodiments of the invention.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. In addition, the embodiments described herein are provided by example, and as such, "one embodiment" can also be used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

As used herein, "at least one of the following: <a list of two or more elements>," "at least one of <a list of two or more elements>," "<a list of two or more elements> or a combination thereof," and similar wording, where the list of two or more elements are joined by "and" or "or", mean at least any one of the elements, or at least any two or more of the elements, or at least all the elements.

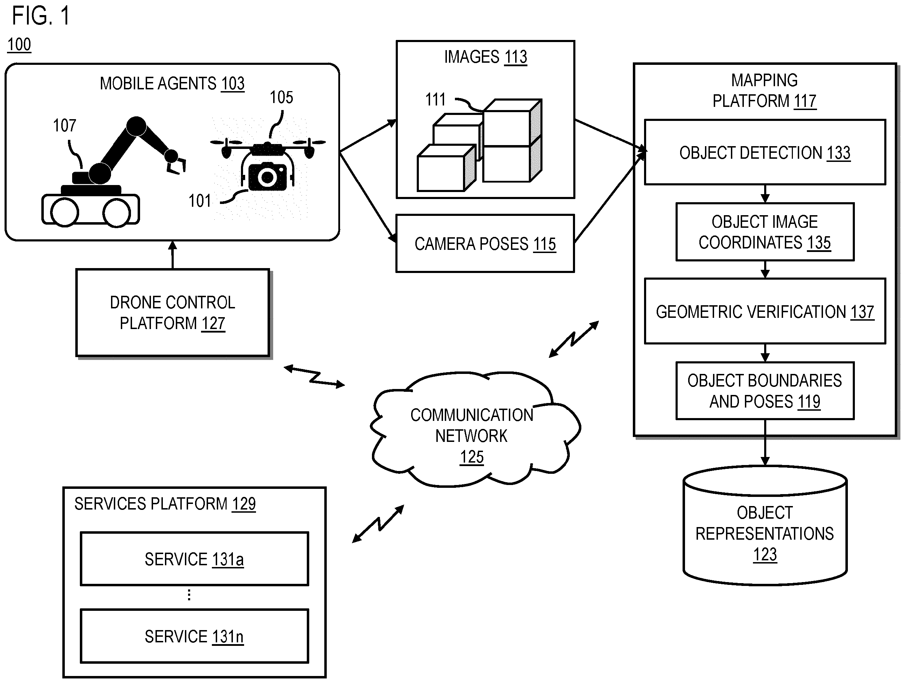

FIG. 1 is a diagram capable of generating a semantic three-dimensional abstract representation of objects, according to one example embodiment. As noted above, in industrial automation applications, a digital representation of objects (e.g. machines, assets, workers, autonomous agents), including sensors and actuators, enables the measurement and modeling of processes in the physical environment. This representation, sometimes known as a digital twin, can be used to optimize environment-wide processes and enable use cases such as path planning, asset management, and general state monitoring.

For use cases such as path planning or collision avoidance involving autonomous agents (workers, robots, drones) or non-stationary assets (boxes or other polyhedrons, hospital beds, shipping containers), it may be necessary to characterize their real-time 3D spatial relationship relative to other objects or to a world coordinate frame. This characterization could include the size, location and orientation of the objects and should be estimated with sufficiently high accuracy and low latency to meet use case requirements.

For many use cases, knowing the location of the objects is sufficient. Others may require their orientation. Some use cases, such as damage inspection or plant monitoring, may require photorealism. Therefore, service providers face significant technical challenges with respect to generating digital representations or digital twins of objects efficiently and with low computational complexity to support real-time or low-latency applications such as but not limited to localization.

To address these technical challenges, the system 100 of FIG. 1 introduces a capability to use cameras 101 (e.g., equipped on mobile agents 103 such as but not limited to drones 105, robots 107, etc.) to generate three-dimensional (3D) representations of environments (e.g., object representations 109) to be used to support localization and any other digital twin applications. More specifically, the various example embodiments described herein solve the problem of generating a 3D map or representation of objects 111 (e.g., determining their 3D location and/or pose) given a set of two-dimensional (2D) images 113 (e.g., captured by the cameras 101). More specifically, given a set of images 113 with corresponding camera poses 115 in a given coordinate frame, the system 100 (e.g., via a mapping platform 117) can determine, for the objects 111 present in the images 113, their boundaries and poses in that frame (e.g., object boundaries and poses 119). In one example embodiment, this capability can be used for generating or augmenting maps for semantic visual localization. It can also be used to create the foundational 3D representation of an environment's digital twin. It is noted that this problem is the converse of the one solved by semantic visual localization where the camera pose is determined based on 2D images of objects with known location.

As used herein, the term "mobile agent" 103 or "agent" refers to a mobile platform that is designed to operate autonomously. For example, mobile agents can be a drone 105, robot 107, or any other mobile device. Mobile agents 103 generally are equipped with the ability to move within their environment and perform tasks based on their programming and sensor inputs. In other words, mobile agents 103 are typically designed to operate autonomously, meaning they can make decisions and perform tasks without direct human intervention. This autonomy is used for tasks such as navigation, obstacle avoidance, and goal achievement. Mobile agents 103 rely on sensors to perceive their environment. These sensors can include cameras, LiDAR (Light Detection and Ranging), radar, ultrasonic sensors, and other equivalent technologies. The information gathered from these sensors allows the mobile agent to make informed decisions about its surroundings. Generally, mobile agents 103 need to navigate through their environment to reach a destination or perform a specific task. Navigation algorithms may involve path planning, obstacle avoidance, and localization techniques (e.g., that rely on 3D representations or digital twins) to ensure the mobile agent 103 can move efficiently and safely.

The motivation for solving the problem 3d representation generation can be illustrated with the following three example applications:
(1) Mapping of shipping containers in a port. Using infrastructure cameras mounted above shipping containers in a port, a set of images captured with varying pan and tilt settings could be used according to the various example embodiments described herein to generate a 3D digital twin of the port's shipping containers. Given this 3D map, mobile agents such as drones 105 or ground robots 107 moving could use images of the containers for visual localization such as the structure-aided visual localization (SAVLoc) technique described in more detail further below. It is noted that the SAVLoc technique is provided only as one but not limiting example of a visual localization technique that can use a map of 3D objects for localization. It is contemplated the various embodiments described herein can be used to support any localization technique that uses 3D maps of objects.
(2) Augmenting a ceiling map. In ground robot applications, images of lights mounted on the ceiling can be used to localize the robot using a localization that relies on mapped lights and related features (e.g., such as but not limited to the structure-aided visual localization described in more detail further below). The various embodiments described herein can be used to identify and add other structures on the ceiling such as fire alarms or air conditioning vents to the semantic visual localization map. In doing so, the localization performance could be improved compared to using only the lights.
(3) Mapping of boxes (or other polyhedrons or 3D volumetric structures) in a warehouse. For autonomous industrial monitory system applications, a drone 105 can fly autonomously through a warehouse aided by visual localization (e.g., SAVLoc or equivalent) and captures images of box barcodes for inventory management. The various embodiments described herein could use additional images to generate a 3D map of the box sizes and locations. If the boxes remain static, they could be added to the sematic visual localization map to improve visual localization (e.g., SAVLoc) performance.

FIG. 1 shows a basic block diagram of an example embodiment for generating semantic, three-dimensional, abstract representations (e.g., object representations 109). As shown, the example embodiment is implemented in a standalone mapping platform 117 (e.g., a server) over a communication network 125, but it is contemplated that the functions of the mapping platform 117 can be performed by any other component of the system 100 (e.g., mobile agents 103, drone control platform 127, services platform 129, services 131a-131n - also collectively referred to as services 131, and/or other component with connectivity to the system 100) alone or in combination with the mapping platform 117. In one example embodiment, the input is a set of images 113, each with a corresponding camera pose 115 in the world frame. The images 113 are segmented (e.g., by image segmentation module/circuitry 133) to identify pixels of relevant objects (e.g., ceiling structures, boxes, shipping containers). From the segmented images, the object image coordinates 135 defining the object boundaries (or any other selected semantic feature of the object) can be determined. From the image coordinates of multiple objects 111 across multiple images 113, the geometric verification module/circuitry 137 can verify which coordinates 135 correspond to which objects 111, according to geometric constraints on the objects. In one example embodiment, this geometric verification 137 simultaneously determines the pose of the objects in the world frame (e.g., object boundaries and poses 119).

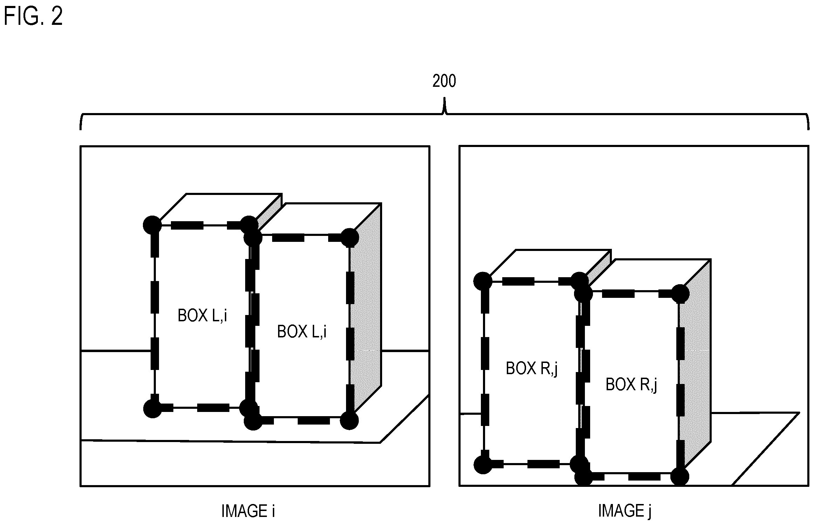

As an example, suppose the mapping platform 117 is given two images with poses (e.g., as shown in example 200 of FIG. 2 as image i and image j). Given a network pre-trained to segment box faces, the outputs of the image segmentation step are the coordinates of box corners in each image i and j, as shown in FIG 2. For image i, two boxes (left L and right R) are detected, and the coordinates of each box's four corners are determined. Similarly for image j, the coordinates of the corners of the left and right boxes are determined. In the geometric verification step, the mapping platform 117 determine that the left boxes in each image (L,i and L,j) correspond to the same box, based on constraints of potential box sizes and their placement on the shelf. Given this correspondence, the size and pose of the box face can be determined in the world frame. A similar correspondence and pose estimation process can be performed for observed boxes R,i and R,j .

It is noted that the maps generated by traditional feature-based visual techniques consist of point clouds which are readable by machines but not understandable by humans. An additional layer of processing would be needed to allow a human to identify objects in the point cloud map. In contrast, the semantic representations of the various embodiments described herein are inherently readable by both machines and humans. By rendering the environment on a computer screen or headset display, a human operator is able to immediately understand the spatial status of the environment. In some cases, this understanding allows human-based decisions that are beyond a machine's capabilities. It is believed that the human readability and decision making enabled by the invention provide a significant added advantage over machine-only processes.

In one example embodiment, the representation generated by the various embodiments described herein are semantic because they rely on semantic features extracted by image segmentation (e.g., semantic feature such as a boundary of a box or object). More generally, semantic features of an object refer to characteristics or attributes that convey the meaning or category of the object (e.g., as classified by image segmentation). Unlike low-level visual features such as color, texture, or shape, semantic features are associated with the object's identity and its role within a broader context. These features are often related to the object's function, class, or the role it plays in a specific scene. Similarly, an abstract representation of an object refers to a conceptual or simplified depiction of the object that captures essential characteristics while omitting specific details. This representation emphasizes certain features or aspects of the object, often to facilitate understanding, analysis, or communication. For example, image segmentation in some of the various embodiments described herein is the boundary of the object so that the spatial context of the object is represented by the boundary.

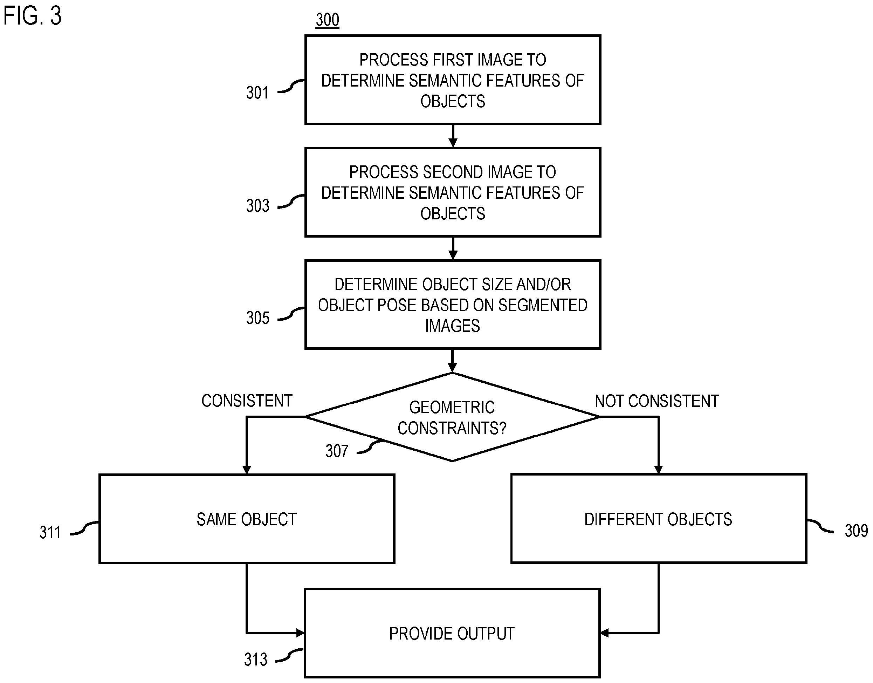

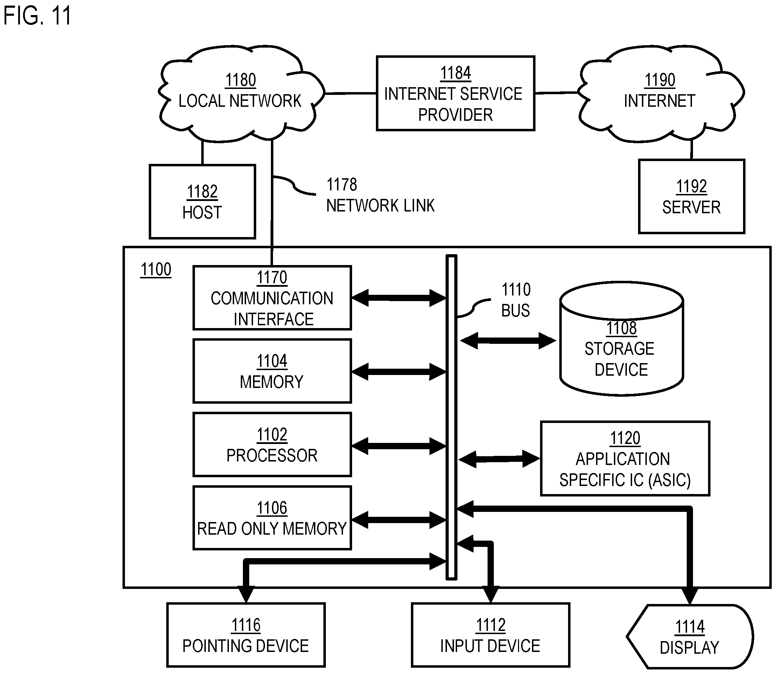

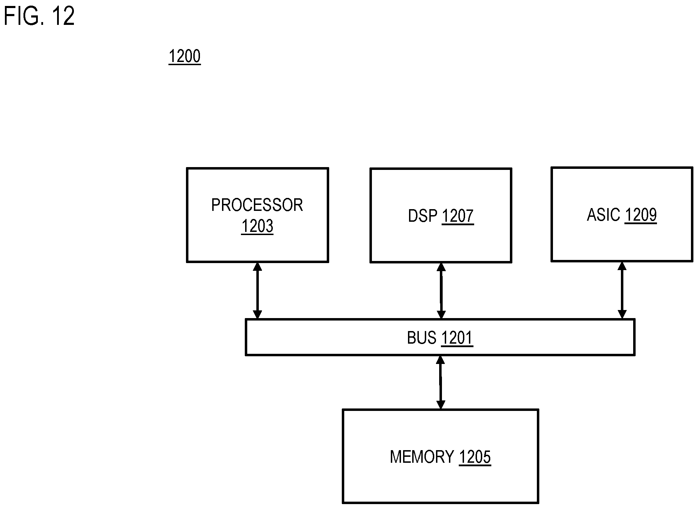

FIG. 3 is a flowchart of a process for generating a semantic three-dimensional abstract representation of objects, according to one example embodiment. In one example embodiment, the mapping platform 117 alone or in combination with the mobile agents 103 or other components of the system 100 (e.g., drone control platform 127, services platform 129, services 131) may perform one or more portions of a process 300 and may be implemented in/by various means, for instance, a chip set including a processor and a memory as shown in FIGs. 11 or 12 or in a circuitry, hardware, firmware, software, or in any combination thereof. In one example embodiment, the circuitry includes but is not limited to image segmentation circuitry 133, geometric verification circuitry 137, and output circuitry. As such, the mapping platform 117, mobile agents 103, drone control platform 127, services platform 129, and services 131, and/or any associated component, apparatus, device, circuitry, system, computer program product, and/or non-transitory computer readable medium can provide means for accomplishing various parts of the process 300, as well as means for accomplishing embodiments of other processes described herein. Although the process 300 is illustrated and described as a sequence of steps, it is contemplated that various embodiments of the process 300 may be performed in any order or combination and need not include all of the illustrated steps.

At step 301, the mapping platform 117 processes a first image using image segmentation to determine a first set of image coordinates corresponding to one or more first semantic features of one or more first objects. At step 303, the mapping platform 117 processes a second image using the image segmentation to determine a second set of image coordinates corresponding to one or more second semantic features of one or more second objects.

In one embodiment, with image segmentation, pixels for the semantic features of interest are identified using, e.g., a pre-trained neural network or equivalent object recognition mechanism as shown in example 200 of FIG. 2. The segmentation neural network (e.g., Mask R-CNN, YOLO network or equivalent) can be trained for image segmentation using a set of labeled training images. If the number of objects to detect is small, then the labeling and training has low complexity. In one example embodiment, a custom network can be trained for each environment.

In one example embodiment, the network can be trained for enhanced segmentation. For example, for a given structural component, the network can be trained to segment different aspects. For example, if a downward facing camera is used for the warehouse drone use case, the network could be trained to segment the top faces of objects separately from the front face. In doing so, additional geometric information could be used for generating 3D representations or digital twins. In this way, the various embodiments described herein can be generalized from a single face of a structure to account for multiple faces.

In one example embodiment, the one or more first semantic features, the one or more second semantic features, or a combination thereof include one or more boundaries of the one or more first objects or the one or more second objects. As previously described, any semantic feature classifiable by image segmentation can be used according to the various embodiments described herein.

In one but not limiting example, the one or more first objects, the one or more second objects, or a combination thereof are one or more boxes or other types of polyhedrons or 3D volumetric structures, and then the one or more first semantic features, the one or more second semantic features, or a combination thereof include one or more corners of one or more faces of the one or more boxes. A polyhedron, for instance, is a three-dimensional geometric solid with flat polygonal faces, straight edges connecting these faces, and vertices where these edges meet. The faces, edges, and vertices of a polyhedron provide key geometric properties that characterize its structure and shape. A neural network or equivalent can be used to detect the features of objects with polyhedral shapes in images for use in the various embodiments described herein.

At step 305, the mapping platform 117 determines an object size, an object pose, or a combination thereof based on the first set of image coordinates, the second set of image coordinates, and a camera pose change between the first image and the second image. In one embodiment, the mapping platform 117 can detect one or more known objects in the first image, the second image, or a combination thereof. The mapping platform 117 then determine a first camera pose of the first image, a second camera pose of the second image, or a combination thereof by using semantic visual localization based on the one or more detected known objects. The camera pose change is based on a first camera pose, the second camera pose, or a combination thereof.

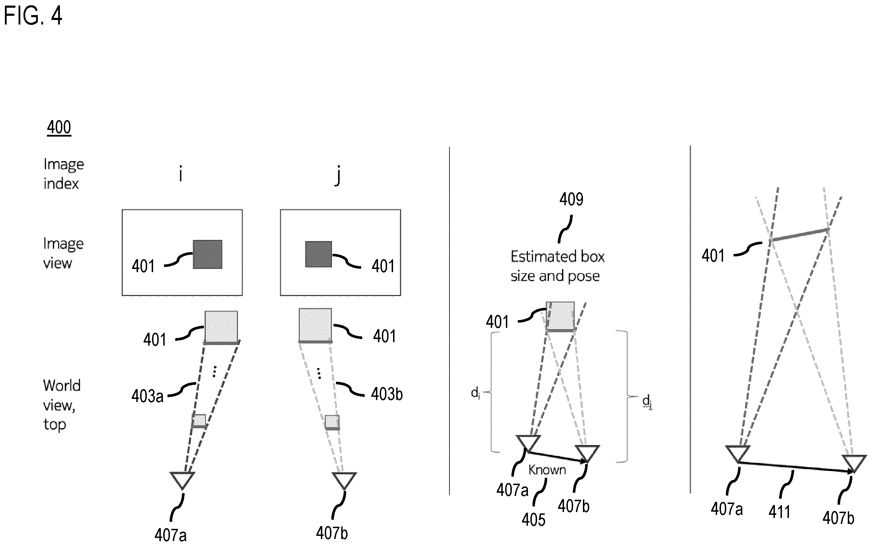

In one example embodiment, geometric verification is the process of determining an object's pose in the world frame given at least two segmented images of the object with known camera pose. FIG. 4 shows an example 400 for two images (i and j) of a single box 401. As shown on the left side of the figure, it is noted that for a given image i or j, there is a "pyramid of ambiguity" (e.g., pyramid 403a for image i, and pyramid 403b for image j) along which the box 401 could lie that would be visually consistent for that image: the box 401 could be larger and farther away or smaller and closer. As shown in the middle of Figure 4, from these two images i and j and the given camera pose offset 405 between them, one can estimate the most likely pair of distances di and dj of the box to each camera location (e.g., camera location 407a for image i, and camera location 407b for image j) by minimizing the reprojection error with respect to each observed box image. The box size and position 409 can then be calculated. It is noted that the boxes viewed by the two images may not be the same. As shown in the right of FIG 4, the camera pose offset 411 is different than the pose offset 405 in the middle, resulting in a larger box size and farther distances. If the reprojection error is too large or if the estimated size and distances are not consistent with geometric constraints imposed by the application, (e.g., the box width is no more than 40cm and its distance is no more than 100cm), then we can conclude the images correspond to different boxes.

While FIG. 4 illustrates example 400 that applies the process of geometric verification of a single box 401 appearing in two images i an j, the various embodiments of the process can be generalized and applied to more than two images, for more than a single object, and for different types of objects. In that case, the process can also account for the pose of the object in the camera frame in determining object correspondences across images. For example, for a given box image, the 3D rotation of the box with respect to the camera frame can be estimated from the vanishing point of the horizontal and vertical edges of the box, as described in the SAVLoc process described further below.

At step 307, as discussed above the mapping platform 117 determines a consistency of the object size, the object pose, or a combination thereof with one or more geometric constraints. The mapping platform 44 determines whether the one or more first objects and the one or more second objects are a same object or different objects based on the consistency. By way of example, the one or more geometric constraints include a maximum object size, a maximum distance from a camera location, a reprojection error, or a combination thereof.

At step 309, if the object size, the object pose, or a combination thereof is not consistent with the geometric constraints, the mapping platform 117 determines that the object size, the object pose, or a combination thereof indicate that the objects in the two segmented images are different objects. The object size and/or object pose can be inconsistent if they differ by more than a threshold value or range from the geometric constraints (e.g., computed size greater than the specified maximum box size or conversely smaller than the specified minimum size, etc.).

At step 311, if the object size, the object pose, or a combination thereof is consistent with the geometric constraints, the mapping platform 117 determines that the object size, the object pose, or a combination thereof indicate that the objects in the two segmented images are the same object. The object size and/or object pose can be consistent if they do not differ by more than a threshold value or range from the geometric constraints.

At step 313, the mapping platform 117 provides the object size, the object pose, or a combination thereof as an output. In one example embodiment, the mapping platform 117 generates a three-dimensional map based on the output. This can also be referred to as a "digital twin."

In one example embodiment, the image segmentation is trained to segment a first object class, and then the output is used to generate an initial map of objects in the first object class. In this way, the mapping platform 117 uses the initial map of objects in the first object class to semantically localize other objects in a second object class segmented by the image segmentation, and then updates the initial map to generate an enhanced map including the other objects in the second object class.

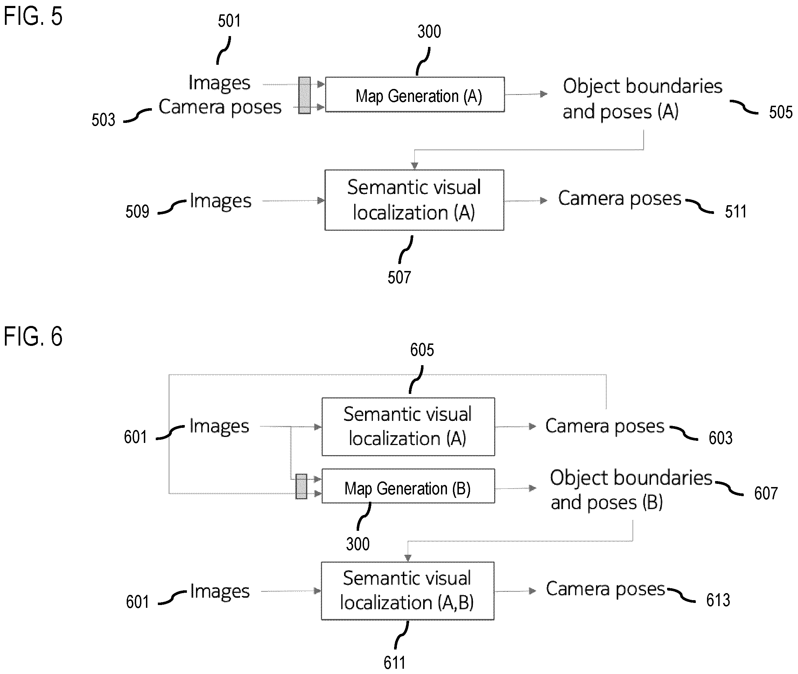

In other words, the various embodiments of the process 300 can be used to bootstrap map generation for semantic visual localization. As shown in FIG. 5, given a network pre-trained to segment objects in class set A, these objects can be used to generate a map for semantic visual localization. For example, in the port use case discussed above, the camera poses can be obtained from the known locations of the cameras and their pan and tilt angles. Class set A could include two object classes: the top and side faces of shipping containers. Using a set of images 501 of class set A objects with linked camera poses 503, the mapping platform 117 would determine the boundaries and poses 505 of the containers of class set A (e.g., according to various embodiments of the map generation process 300). These would form the basis of a map used for semantic visual localization 507 using class set A objects to process images 509 to camera poses 511, e.g., enabling drones and robots to navigate through the port.

In one example embodiment, the map generation process 300 can also be used to enhance existing maps used for semantic visual localization. As shown in FIG. 6, it is assumed that there is an existing map for objects in class set A. Given a set of images objects 601 of class set A, the camera poses 603 can be estimated using semantic visual localization 605 and objects from this class set A. The images 601 with their link poses 603 can then be used for various embodiments of the map generation process 300 to estimate the boundaries and poses 607 of objects in class set B. These objects can then be added to the map used for semantic visual localization (e.g., enhanced to include both objects from class set A and class set B). In this way, images 609 can be processed for semantic visual localization 611 for both class sets A and B to compute camera poses 613. Referring to the visual localization example discussed above, class set A could consist of lights and class set B could consist of fire detectors. The camera poses could be estimated from the map of the lights, enabling the various embodiments of the process 300 to estimate the boundaries and poses 607 of the fire detectors. These objects are then added to the map. For the SAVLoc example discussed above, class A could consist of the horizontal and vertical shelf structures, and class B could consist of boxes.

In one example embodiment, the output of the map generation process 300 (e.g., object size, boundary, and/or pose) is enhanced with additional object metadata, visual data, or a combination thereof. The additional object metadata, the visual data, or a combination thereof is used to render a representation (e.g., photorealistic representation) of the one or more first objects, the one or more second objects, or a combination thereof.

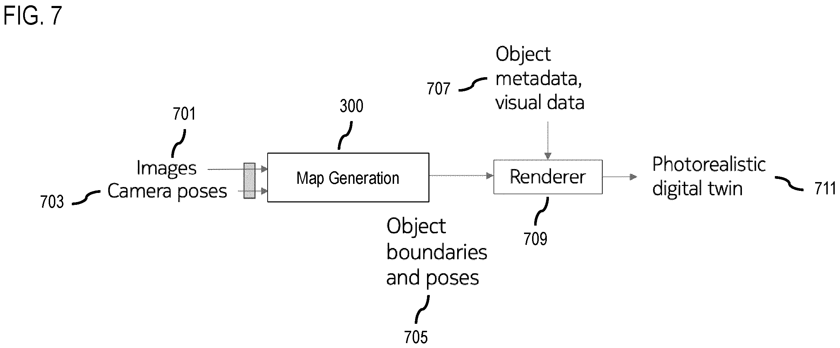

In other words, the mapping platform 117 can generate photorealistic digital twins. As shown in FIG. 7, the various embodiments of the map generation process 300 can be used to process images 701 and corresponding camera poses 703 to output object boundaries and poses 705 representing the objects depicted in the images 701. The output of the baseline process 300 can be enhanced with additional information (e.g., object metadata, visual data 707 such as object attributes, types, textures, etc.) to provide a richer digital twin representation. Metadata such as ID and status can be linked to objects. Visual "skins" or textures can also be added on objects to create more visually realistic renderings. A renderer 709 can then process the additional object metadata, visual data 707 to generate photorealistic digital twin 711 (e.g., for display in a user interface of a display device).

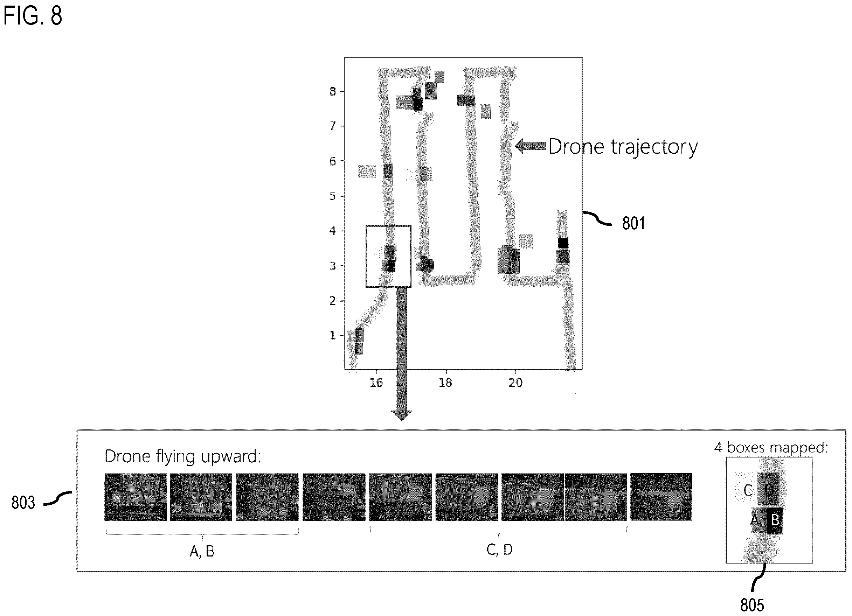

In one warehouse example use case, example performance of the process 300 can be illustrated. In this example, the mapping platform 117 processed images of a warehouse captured by a drone to create a map of the boxes. A total of 567 grey-scale images, captured at 3Hz and 480 by 640 resolution, were processed. Boxes were segmented using a pre-trained network, and the camera pose was obtained from the on-board visual-inertial odometry (VIO). The example 800 of FIG. 8 shows the mapping 801 of 33 boxes from the sequence of images. It also shows a sequence 803 of 9 images as the drone was flying upward, used to generate a specific set 805 of 4 boxes.

In one example embodiment, the various embodiments of the process 300 can be used for generating maps for environments with limited types of objects. For example, in a typical warehouse environment, objects include boxes, pallets, workers, forklifts, shelving, and ceiling structures. Training networks to segment these limited types of objects is generally straightforward and requires minimal effort. Furthermore, image segmentation inference can be implemented with very high efficiency (e.g., using YOLOv8). A list of use case examples listing environments and associated objects for image segmentation includes but is not limited to the following:
(a) Warehouse: boxes, pallets, workers, forklifts, shelving, ceiling structures.
(b) Shipping port: shipping containers, cars, forklifts, straddle carriers, workers.
(c) Hospital: ceiling structures, beds, medical equipment, workers, patients
(d) Airport: ceiling structures, carts, wheelchairs, freight, outdoor vehicles
(e) Mine: lighting, workers, mobile equipment

In one example embodiment, the semantic 3D abstract representations and/or maps derived therefrom can be used for visual localization of mobile agents 103. Localization, in the context of mobile agents 103 such as drones 105 and robots 107 (as well as in general technology and computing), refers to the process of determining the position or location of a device within its environment. More specifically, localization enables autonomous systems to navigate, interact with their surroundings, and execute tasks accurately.

Traditional localization techniques include Fiducial-based Localization (FidLoc), Hierarchical Localization (HLOC), and Ultrawideband Localization (UWB), but each technique presents technical challenges for implementation.

FidLoc is a visual based solution in which 2D fiducial tags are distributed through an environment. The size and location of the tags is precisely known (with cm-level accuracy) so that given an image of a tag captured by a drone camera, the six degrees of freedom (6DoF) pose can be computed. Centimeter-level accuracy can be achieved but only when a tag is seen by the camera. A denser deployment of tags results in more robust tracking, but this results in higher overhead costs. In some situations, the cost of tag deployment can be a significant fraction (~30%) of the total deployment cost.

HLOC is a vision-based solution which relies on extracting visual features from a query image captured by a mobile camera and matching the features with those in a pre-generated map database. The map database is generated from a video captured in the environment of interest by a mobile camera. 6DoF camera pose with cm-level localization accuracy can be achieved. This technique is well suited for visually rich environments. However, the map database would need to be updated whenever there are significant visual changes to the environment.

UWB is a radio-based solution that achieves sub-meter localization accuracy when there is a line-of-sight (LOS) path between wired infrastructure node(s) and the device. 3D localization can be obtained, but accurate orientation estimation is not available. In cluttered environments, a high density of infrastructure nodes is required to provide LOS paths with multiple nodes. Also, the location of the nodes needs to be determined with cm-level accuracy.

To enable drone navigation (e.g., in indoor industrial environments), the technical problem is to determine a drone's pose accurately (e.g., cm-level location and degree-level orientation), in real time (e.g., approximately 5Hz). In some embodiments, there are additional technical problems associated with visual localization in visually repetitive environments such as warehouses consisting of identical shelf structures or outdoor ports with identical shipping containers.

To address these technical challenges, the various example embodiments described herein introduce a capability to provide SAVLoc is a visual-based localization technique in which an image, taken by a mobile camera, is used to estimate the camera's pose (e.g., 3D location and/or 3D orientation with respect to the world coordinate frame). The various example embodiments, for instance, are used to identify known structural components in an image and to use their world-frame coordinates to determine the camera pose. The camera is fixed with a known spatial relationship to a mobile agent (e.g., drone, forklift, robot), so that the pose of the agent can be derived from the camera's pose. By way of example, possible structures used for SAVLoc include but are not limited to shelves in a warehouse, containers in a port, door frames, window frames, lights (e.g., overhead lights in an office/warehouse), beams, and/or any other structural components (e.g., edges, intersections, openings, etc.) in an environment. The various example embodiments are based on the geometric information about the structure being known, such as their dimensions and coordinates of edges and corners.

In one embodiment, the camera's pose can be determined with respect to any number of degrees of freedom such as six degrees of freedom (6DoF) or three degrees of freedom (3DoF). 6DoF refers to the ability of the camera and/or mobile agent to move freely in three-dimensional space. These six degrees of freedom represent all possible independent movements that an object can make and include: (1) translation along an x-axis, (2) translation along a y-axis, (3) translation along z-axis, (4) rotation around the x-axis (e.g., roll), (5) rotation around the y-axis (e.g., pitch), and (6) rotation around the z-axis (e.g., yaw). For example, a drone with 6DoF capability can translate (move) in any direction and rotate (change orientation) along all three axes, enabling it to navigate complex environments. 3DoF refers to the ability of a mobile agent to move freely in three-dimensional space along specific axes while having limited rotational freedom (e.g., a mobile agent such as a robot or terrestrial vehicle that is limited to traveling on the ground or surface). In other words, in a 3DoF device, there is no rotational freedom; the mobile agent can only move along the three axes.

In one embodiment, SAVLoc can be used in autonomous drone navigation as part of an autonomous industrial monitoring system. Example use cases include but are not limited to scanning barcodes on boxes in a warehouse and providing video footage of plants growing in an indoor vertical farm. It is noted that although the various example embodiments described herein discuss SAVLoc in the context of an example use case of a drone camera flying through a warehouse with repetitive shelf structures, it is contemplated that the various embodiments are applicable to localization of any type of mobile agent in any environment (e.g., indoor or outdoor).

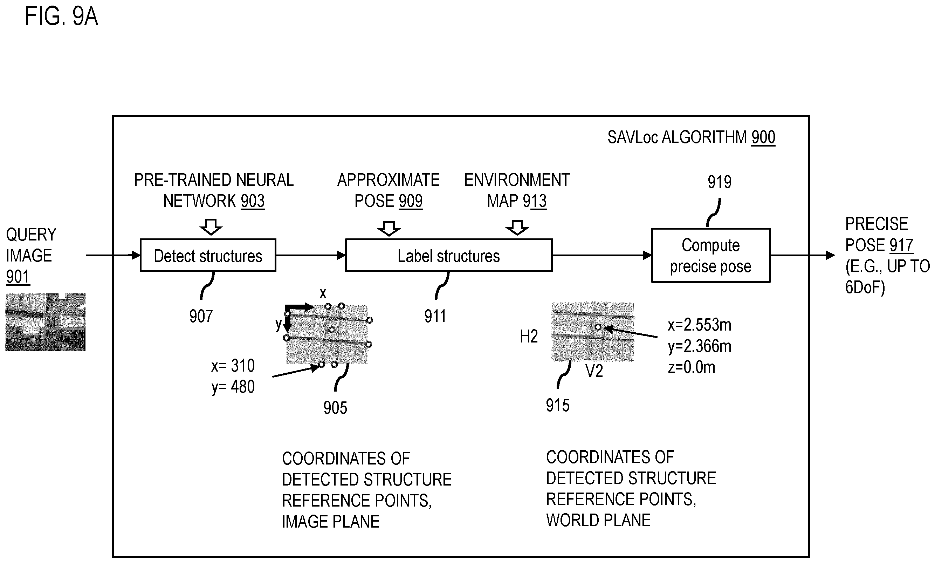

As shown in FIG. 9A, in one example embodiment, the SAVLoc algorithm 900 starts with an input of a single image of the environment (e.g., query image 901) captured by a drone camera (not shown). The image 901, for instance, can be color or black and white and of any resolution or quality. In this example, the resolution is VGA quality at 480x640 pixels.

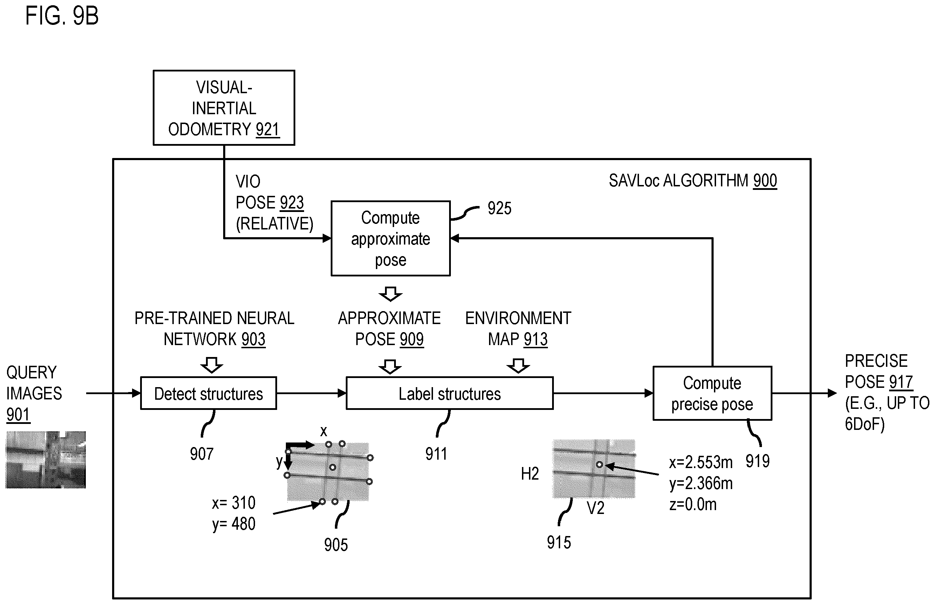

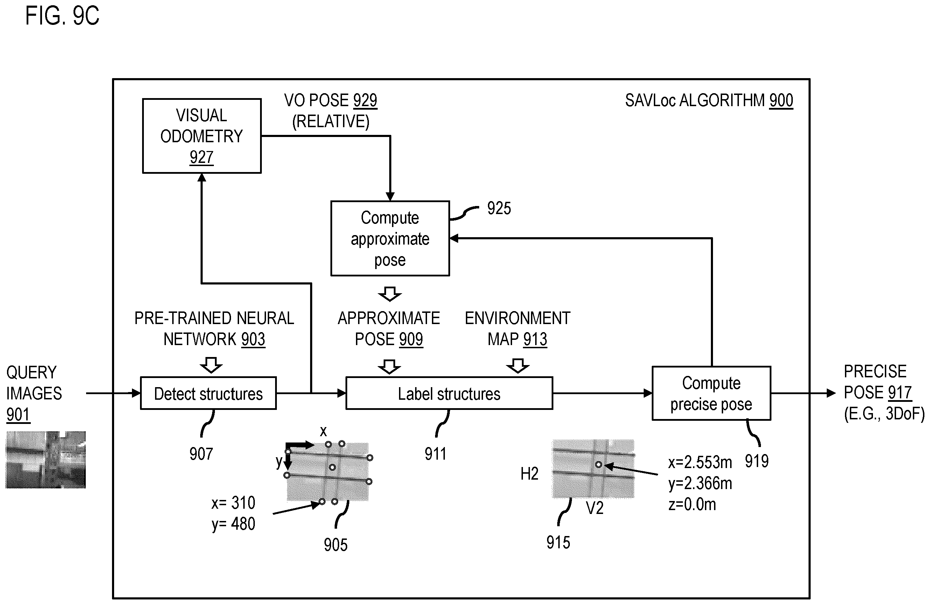

In one example embodiment, the SAVLoc process 900 consists of three steps:
(1) Segmentation. Pixels for the horizontal and vertical shelf components (e.g., more generally, structural components) are identified using, e.g., a pre-trained neural network 903 or equivalent object recognition mechanism to detect structures and/or their boundaries which are then are highlighted (e.g., as shown in segmented image 905 with reference points of detected components in the image frame) in block 907. In this example, segmented image 905 highlights the horizontal and vertical structural components of the shelves as darker shaded lines. For example, the pixel coordinates of where the detected components intersect the edge of the image are determined (e.g., x = 310 and y = 480 starting in pixel coordinates with the origin at the top left corner of the image 905).
   In one embodiment, the pre-trained neural network is trained to identify pixels of the image 901 that correspond to one or more objects of interest. Then, a post-processing step can be applied to determine boundaries of the object(s) of interest in the image 901 from the segmented image 905, and a point (e.g., a centroid or other designated point) within the determined boundaries is identified to represent the detected object. In other embodiments, the pre-trained neural network 903 can be trained to identify objects of interest using bounding boxes. In this case, the representative point of the object can be determined based on a centroid (or any other designated point) of the bounding box. In yet another embodiment, the pre-trained neural network 903 can be trained to directly output the boundaries, representative point, centroid, etc. of the detected objects of interest. It is noted that the above examples of image segmentation outputs from the pre-trained neural network 903 are provided by way of illustration and not as limitations. If no shelf structures or other structures detectable by the pre-trained neural network 903 are seen, the process 900 waits for the next image.
(2) Correspondence. Because of the repetitive nature of some structures (e.g., shelves, shipping containers, etc.) in the environment, there could be ambiguity about which structure (e.g., shelf) is seen. Using an approximate estimate 909 of the current pose (e.g., based on a prior pose and odometry estimates as further discussed with respect to FIGs. 9B and 9C below), the indices of the identified structure can be determined (e.g., horizontal element 2, vertical element 9) in block 911. The 3D world coordinates of the detected components can then be looked up in an environment map 913 of known structures such that their location coordinates are indicated in a world frame. In this example, the coordinates of the corners of the overlapping rectangular area are used to obtain segmented image 915 in which the pixel coordinates of the segmented image 905 are converted to a world frame (e.g., x = 2.553 m, y = 2.366 m, and z = 0.0 m).
(3) Pose estimation. From the 3D coordinates and corresponding 2D pixel coordinates, the pose 917 of the camera in the world frame can be computed geometrically in block 919.

The various embodiments of the SAVLoc process described herein have several technical advantages including but not limited to having low cost in terms of overhead because in built environments (e.g., warehouses, ports, etc.), the structural information is easily acquired from blueprints and datasheets (e.g., collectively referred to as blueprint data). It can also have low run-time costs by leveraging efficient, state-of-the-art neural networks for image segmentation. The remaining calculations for correspondence and pose estimation are very computationally light weight, thereby using less computational resources relative to traditional approaches.

It is contemplated that the approximate pose 909 can be obtained using any means. For example, the approximate pose 909 can be obtained using any other pose estimation modality known in the art. In one embodiment, the approximate pose 909 can be determined using odometry. Odometry, for instance, is a method used, e.g., in robotics and autonomous systems to estimate position and velocity by analyzing data from its motion sensors or equivalent. It relies on measuring the changes in position over time to track movement. The accuracy of odometry is based on how accurately the changes in position can be tracked over time. For example, as shown in FIG. 9B, visual-inertial odometry (VIO) (e.g., based on using inertial measurement units (IMUs) to track movement over time) can provide sufficient accuracy to support full 6DoF pose estimation. In the example of FIG. 9B, the SAVLoc algorithm 900 is illustrated to include input from VIO 921. VIO 921, for instance, can be performed on a mobile agent equipped with an IMU and VIO processing hardware, software, and/or circuitry. In one embodiment, VIO 921 tracks movement of the camera device and/or mobile agent since the last computed precise pose 917 to determine a VIO pose 923 relative to the last computed precise pose 917. The VIO pose 123 is combined with the last computed precise pose 917 to compute the approximate pose 909. The SAVLoc algorithm then proceeds as described in the various embodiments of FIG. 9A.

In one embodiment, as discussed above, the SAVLoc process can be applied in a 3DoF scenario as opposed, for instance, to a 6DoF scenario. In this scenario, the accuracy of the VIO is not needed, and visual odometry (VO) can be performed to track relative movement. In this way, VO can eliminate the IMU hardware needed to support VIO, thereby advantageously reducing or eliminating the computational complexity and hardware cost that is used for VIO. FIG. 9C is a diagram of providing SAVLoc based on optional VO, according to one example embodiment. The technical problem is to estimate a mobile agent's 3DoF pose in real time with respect to a world coordinate frame. It is noted that while SAVLoc (e.g., based on optional VIO as described with respect to FIG. 9B) can be used to provide full 6DoF pose, 3DoF pose can be sufficient to enable navigation of ground-based agents such as robots, forklifts, and workers.

The accuracy of the estimates depends on the use case, where the most aggressive performance targets are cm-level error in 2D location and degree-level error in yaw. The rate of pose estimation also depends on the use case. For example, robots moving at pedestrian speeds could require estimation rates of about 5Hz. Accordingly, the SAVLoc process can be simplified to using VO to estimate approximate pose input to the SAVLoc algorithm 100. In one embodiment, SAVLoc can be implemented more simply using ceiling mounted structures (e.g., lights, fire alarms, sprinklers, and/or the like) that are typically mounted at a known height to make mapping and/or related localization calculations less complex. In other words, VO based on such ceiling mounted structures can be used in the SAVLoc algorithm 900 when 3DoF pose estimation is sufficient. As shown in FIG. 9C, in one embodiment, the SAVLoc algorithm 900 can use VO 927 to provide a visual localization system where a camera, attached to an agent of interest and pointing upwards, captures images 901 and uses ceiling structures such as lights to track the 3DoF camera pose (e.g., precise pose 917 at 3DoF). In other words, because the mobile agent is ground-based or otherwise fixed to a surface, the camera has a known height and has roll and pitch equal to zero, which in turn can be used to simplify the pose estimation process for 3DoF. One assumption of this approach is that human-occupied, indoor industrial environments will almost certainly have lights or other machine-detectable structures installed on the ceiling. Leveraging blueprints (e.g., blueprint data) that provide the locations of these lights or structures, various example embodiments of the SAVLoc algorithm 900 are able to achieve sub-meter accuracy for tracking ground-based agents, but it does so with much lower complexity in terms of overhead, tracking, and processing.

With respect to overhead, the SAVLoc algorithm 900 based on VO as illustrated in FIG. 1C does not require the expensive map generation process traditional approaches such as HLoc. Instead, they require knowledge of the known structures (e.g., an environment map 913 such as, but not limited to, a ceiling map of lights and other structures in 3D world coordinates) which can be acquired easily from blueprints (e.g., also referred to as blueprint data). The complexity of the SAVLoc algorithm of FIG. 9C would be lower than the shelf-based approach of FIG. 9A if the number of lights is fewer than the number of structural components (e.g., shelves, shipping containers, boxes, etc.). As previously discussed, the SAVLoc algorithm 900 also includes the training of neural networks 903 or equivalent for image segmentation of a sequence of input images 901 to identify or detect environmental structures 907. This process can be performed for each environment using a relatively small set of labeled images. In one embodiment, the SAVLoc algorithm 900 can use the maps and/or 3D representations generated according to the various embodiments of the map generation process 300 described above.

With respect to tracking, compared to the SAVLoc algorithm 900 of FIG. 9B at 6DoF which uses visual inertial odometry (VIO) (or other equivalent localization modality) for sophisticated 6DoF tracking, the SAVLoc algorithm 900 of FIG. 9C is able to operate with only visual VO 927 for 3DoF tracking. The 3DoF VO calculation is much simpler than 6DoF VIO, and VO does not require an inertial measurement unit (IMU). In other words, the SAVLoc algorithm 900 of FIG. 9C is a simplified embodiment of the SAVLoc process that can use VO 927 in place of VIO 921 to advantageously further reduce the complexity of various embodiments of visual localization described herein.

In one example embodiment, VIO 921 is the process of estimating an agent (e.g., drone) pose using both camera and inertial measurement unit (IMU) sensor inputs. VIO 921 is typically used to determine the relative pose change between time instances, and it suffers from drift due to biases in the IMU measurements. VIO 921 can be paired with SAVLoc to provide 6DoF pose estimation. In contrast, VO 927 forgoes the use of IMU inputs, and tracks the camera's movement and pose in a given environment based on the changes observed in consecutive or a sequence of images (e.g., based on structures detected by pre-trained neural network 903 over a sequence of images 901). More specifically, VO 927 estimates motion by matching features between images 901 and analyzing the spatial displacements of the features between images 901. The relative translation/movement and rotation between consecutive frames are used to update the camera's pose instead of measuring the relative movement and rotation using an IMU as done in VIO.

In one example embodiment, the processing consists of image segmentation 907, visual odometry 927, and relocalization (e.g., compute precise pose 919) to output a 3DoF pose estimation 917 in a world frame. By way of example, the entire processing for a single image takes about 20ms using a current server-grade GPU. In contrast, neural network processing for the traditional HLoc approach consists of visual feature extraction and matching and requires about 800ms per image on the same GPU.

Overall, the SAVLoc algorithm 900 based on optional VO 927enables accurate localization in very large indoor environments with very low cost. It was shown to achieve sub-meter accuracy in a 20000m^2 warehouse with no added localization infrastructure. The overhead for digitizing the blueprint, creating a labeled training set, and training the segmentation network took only about 10 hours.

For this deployment, images captured by a drone camera are communicated in real-time to an on-premises edge server running the SAVLoc algorithm. The algorithm determines the 6DoF camera pose in real-time, and this pose is used by the AIMS autonomy software stack to guide the drone through the environment.

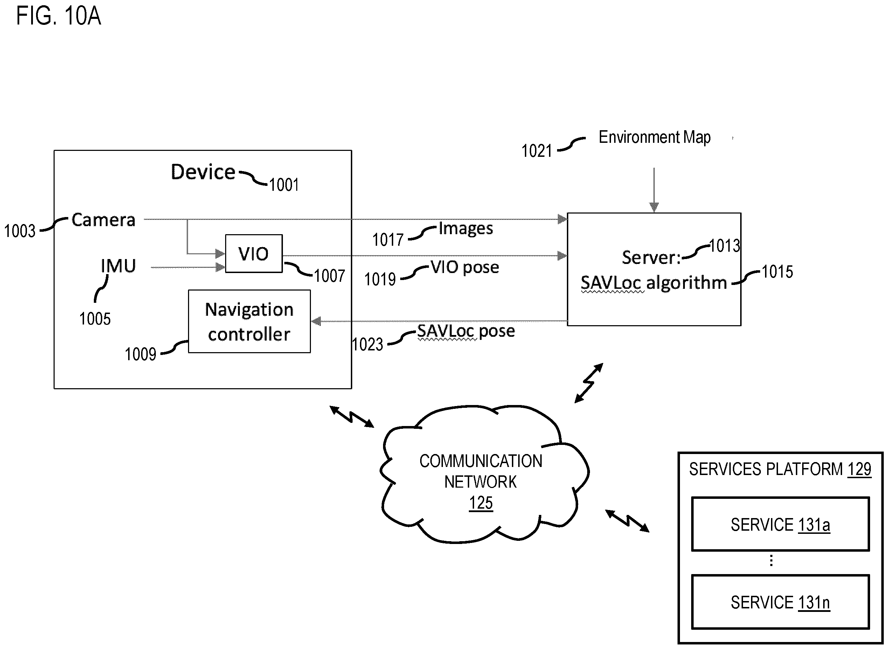

In one embodiment, the various embodiments described herein can be implemented in a client-server architecture or a device only architecture. For example, FIG. 10A is a diagram of a SAVLoc implementation in a server (e.g., mapping platform 117), according to one example embodiment. As shown, a device 1001 (e.g., a mobile agent 103 such as a drone 105, robot 107, forklift, etc.) is equipped with a camera 1003, IMU 1005 to provide data to a VIO module 1007 (e.g., VIO hardware, software, and/or circuitry), and a navigation controller 1009 to control navigation of the device 1001. In one embodiment, the IMU 1005 is not needed if performing 3DoF pose estimation based on VO instead of VIO. The device 1001 has connectivity over a communication network 125 to a server 1013 that executes a SAVLoc algorithm 1015 (e.g., as described with respect to various embodiments of FIGs. 9A-9C) according to the various embodiments described herein to compute a SAVLoc pose 1023. The server 1013 uses the SAVLoc algorithm 1015 to process images 1017 from the camera, VIO pose 1019 (e.g., approximate pose of the camera 1003), and an environment map 1021 (e.g., created according to various embodiments of the process 300) of known structure dimensions and locations to compute the SAVLoc pose 1023. The SAVLoc pose 1023 is then transmitted back to the navigation controller 1009 to autonomously navigate the device 1001. In one embodiment, the communication of the SAVLoc pose 1023 back to the device 1001 is not necessary for some applications if the device 1001 itself does not need to know its location. In another embodiment, the SAVLoc pose 1023 can be transmitted to a services platform 129 and/or one or more services 131 for the services platform 129 and/or services 131 to provide one or more location-based services (e.g., mapping, navigation, autonomous operation, etc.) based on the SAVLoc pose 1023.

In summary, in a server implementation, a query image 1017 and a VIO pose estimate 1019, relative to the previous query image pose, could be communicated from the device 1001 (e.g., drone) to the server 1013. The SAVLoc pose 1023 would be computed at the server 1013 and communicated back to the device 1001 (e.g., drone) to be integrated with the flight controller process (e.g., navigation controller 1009). In general, a server 1013 could provide localization services for devices 1001 (e.g., drones) in multiple environments. Hence during a service initialization phase, the device 1001 (e.g., drone) could notify the server 1013 which environment it is flying in. The server 1013 then loads the appropriate structural information (e.g., database 1021) to be used for every query from this device 1001 (e.g., drone).

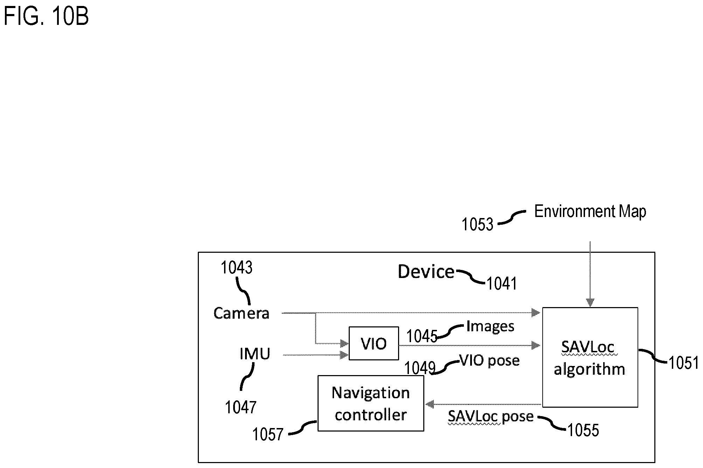

FIG. 10B is a diagram of a SAVLoc implementation on a device only, according to one example embodiment. As shown, the device 1001 (e.g., a mobile agent 103) includes all components for performing the SAVLoc process as a standalone device. For example, the device 1041 includes a camera 1043 for capturing images 1045 for localization and an IMU 1047 for determining a VIO pose 1049. The device 1041 also includes a SAVLoc algorithm 1051 for processing the images 1045 and VIO pose 1049 along with a database 1053 of know structure dimensions and locations to compute a SAVLoc pose 1055. In one embodiment, the database 1053 can be downloaded to the device 1041 during an initialization or pre-processing operation. The SAVLoc pose 1055 that is then provided to the device 1041's navigation controller 1057. In this case, all SAVLoc functions are performed within the device 1041 without aid of an external server. In some example embodiments, the device 1041 can transmit the computed SAVLoc pose 1055 to other external components (e.g., services platform 1025 and/or services 1027 as described above).

Returning to FIG. 1, in one example embodiment, the mapping platform 117 and/or mobile agents 103 can include one or more devices or apparatuses, for example, standalone cameras, User Equipment (UE) devices, IoT devices, and/or any other device capable of acquiring sensor information from which structural component features can be extracted for structure/light-aided visual localization according to the various example embodiments described herein. In another example, the mapping platform 117 and/or mobile agents 103 can be implemented, respectively, in the standalone camera, User Equipment (UE) device, IoT device, and/or any other device capable of providing structure/light-aided visual localization of the various embodiments described herein. Such devices can include but are not limited to a mobile device, a smartphone, smart glasses, a smart visor, a mobile communication device, an infotainment device, a navigation device, a smart watch, a television, a display, a vehicle, a smart lamppost, a smart streetlight, etc. or any combination thereof. By way of example, the mobile agents 103 (e.g., user equipment (UE) devices) can be any type of mobile terminal, user terminal, fixed terminal, or portable terminal including a mobile handset, station, unit, device, wearables (e.g., smart glasses, augmented reality (AR) glasses, smart visor or shield), mobile communication device, multimedia computer, multimedia tablet, Internet node, communicator, desktop computer, laptop computer, notebook computer, netbook computer, tablet computer, personal communication system (PCS) device, personal navigation device, personal digital assistants (PDAs), point of sales (POS) device, audio/video player, digital camera/camcorder, positioning device, fitness device, television receiver, radio broadcast receiver, electronic book device, game device, display device, vehicle, smart lamppost, smart streetlight, including the accessories and peripherals of these devices, or any combination thereof. It is also contemplated that a UE can support any type of interface to the user (such as "wearable" circuitry, etc.). In one instance, an IoT device may include one or more remote sensor devices, a wearable, a UE, or a combination thereof. Also, the UEs may be configured to access the communications network by way of any known or still developing communication protocols. In one example embodiment, privacy preserving masking function (e.g., encoding and/or decoding) can be implemented in any of the above-mentioned device or apparatus.

In one example, the mobile agents 103 include one or more device sensors (e.g., a front facing camera, a rear facing camera, digital image sensors, LiDAR (light detection and ranging) sensor, global positioning system (GPS) sensors, sound sensors, radars, infrared (IR) light sensors, microphones, height or elevation sensors, accelerometers, tilt sensors, moisture/humidity sensors, pressure sensors, temperature sensor, barometer, NFC sensors, wireless network sensors, etc.) and clients (e.g., mapping applications, navigation applications, image processing applications, augmented reality applications, image/video application, modeling application, communication applications, etc.). In one example, GPS sensors can enable the mobile agents 103 to obtain geographic coordinates from one or more satellites for determining current or live location and time. Further, a user location within an area may be determined by a triangulation system such as A-GPS (Assisted-GPS), Cell of Origin, or other location extrapolation technologies when cellular or network signals are available. Further, the mobile agents 103 can include one or more flash devices, e.g., a black light infrared flash.

In one example embodiment, the mapping platform 117 and/or mobile agents 103 can perform functions related to generating semantic 3D abstract representations of objects as discussed with respect to the various embodiments described herein. In one instance, the mapping platform 117 can be implemented in a standalone server computer or a component of another device with connectivity to the communications network 125. For example, the component can be part of an edge computing network where remote computing devices are installed within proximity of a geographic area of interest, one or more assets/objects/individuals to be monitored, or a combination thereof.

In one instance, the mapping platform 117 and/or mobile agents 103 can include one or more neural networks or other machine learning algorithms/systems to process image date, such as images/frames of an input (e.g., a video stream or multiple static/still images, or serial or satellite imagery) (e.g., using an image segmentation algorithm) to extract structural object features, object boundaries, object sizes, etc. In one instance, the neural network is a convolutional neural network (CNN) which consists of multiple layers of collections of one or more neurons (which are configured to process a portion of an input data).

In one example, the mapping platform 117 and/or mobile agents 103 have communication connectivity to one or more services platforms (e.g., services platform 129) and/or one or more software applications that provides one or more services 131 that can use the output of the system. By way of example, the communication connectivity can be internal connection within the apparatuses and/or happen over the communications network 125. By way of example, the one or more services 131 may also include mapping services, navigation services, notification services, social networking services, content (e.g., audio, video, images, etc.) provisioning services, application services, storage services, augmented reality (AR) services, location-based services, information-based services (e.g., weather, news, etc.), payment services, marketplace services, data analytics services, etc. or any combination thereof.

In one example, one or more mobile agents 103 may be configured with one or more various sensors for acquiring and/or generating sensor data for real-time use. For example, the sensors can capture one or more images of a geographic area and/or any other sensor data (e.g., LiDAR point clouds, infrared scans, radar scans, etc.) that can be used for real-time object tracking or analytics for spatial-temporal authentication according to the embodiments described herein.

In one example, the components of the system may communicate over one or more communications networks 125 that includes one or more networks such as a data network, a wireless network, a telephony network, or any combination thereof. It is contemplated that the communication network 125 may be any local area network (LAN), metropolitan area network (MAN), wide area network (WAN), a public data network (e.g., the Internet), short range wireless communication network, or any other suitable packet-switched network, such as a commercially owned, proprietary packet-switched network, e.g., a proprietary cable or fiber-optic network, and the like, or any combination thereof. In addition, the communication network 125 may be, for example, a cellular telecom network and may employ various technologies including enhanced data rates for global evolution (EDGE), general packet radio service (GPRS), global system for mobile communications (GSM), Internet protocol multimedia subsystem (IMS), universal mobile telecommunications system (UMTS), worldwide interoperability for microwave access (WiMAX), Long Term Evolution (LTE) networks, 5G/3GPP (fifth-generation technology standard for broadband cellular networks / 3^{rd} Generation Partnership Project) or any further generation, code division multiple access (CDMA), wideband code division multiple access (WCDMA), wireless fidelity (Wi-Fi), wireless LAN (WLAN), Bluetooth^{®}, UWB (Ultrawideband), Internet Protocol (IP) data casting, satellite, mobile ad-hoc network (MANET), and the like, or any combination thereof.

In one example, the system or any of its components may be a platform with multiple interconnected components (e.g., a distributed framework). The system and/or any of its components may include multiple servers, intelligent networking devices, computing devices, components, and corresponding software for spatial-temporal authentication. In addition, it is noted that the system or any of its components may be a separate entity, a part of the one or more services, a part of a services platform, or included within other devices, or divided between any other components.

By way of example, the components of the system can communicate with each other and other components external to the system using well known, new or still developing protocols. In this context, a protocol includes a set of rules defining how the network nodes, e.g. the components of the system, within the communications network interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

The processes described herein for generating semantic 3D abstract representations may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

Additionally, as used herein, the term 'circuitry' may refer to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term `circuitry' as used herein also includes, for example, a baseband integrated circuit or applications processor integrated circuit for a mobile phone or a similar integrated circuit in a server, a cellular device, other network device, and/or other computing device.

FIG. 11 illustrates a computer system 1100 upon which an embodiment as described with the processes 100, 300, 900, and 920 of the invention may be implemented. Computer system 1100 is programmed (e.g., via computer program code or instructions) to generate semantic 3D abstract representations as described herein and includes a communication mechanism such as a bus 1110 for passing information between other internal and external components of the computer system 1100. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1110 includes one or more parallel conductors of information so that information is transferred quickly among devices coupled to the bus 1110. One or more processors 1102 for processing information are coupled with the bus 1110.

A processor 1102 performs a set of operations on information as specified by computer program code related to generating semantic 3D abstract representations. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1110 and placing information on the bus 1110. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1102, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1100 also includes a memory 1104 coupled to bus 1110. The memory 1104, such as a random access memory (RAM) or other dynamic storage device, stores information including processor instructions for generating semantic 3D abstract representations. Dynamic memory allows information stored therein to be changed by the computer system 1100. RAM allows a unit of information stored at a location called a memory address to be stored and retrieved independently of information at neighboring addresses. The memory 1104 is also used by the processor 1102 to store temporary values during execution of processor instructions. The computer system 1100 also includes a read only memory (ROM) 1106 or other static storage device coupled to the bus 1110 for storing static information, including instructions, that is not changed by the computer system 1100. Some memory is composed of volatile storage that loses the information stored thereon when power is lost. Also coupled to bus 1110 is a non-volatile (persistent) storage device 1108, such as a magnetic disk, optical disk or flash card, for storing information, including instructions, that persists even when the computer system 1100 is turned off or otherwise loses power.

Information, including instructions for generating semantic 3D abstract representations, is provided to the bus 1110 for use by the processor from an external input device 1112, such as a keyboard containing alphanumeric keys operated by a human user, or a sensor. A sensor detects conditions in its vicinity and transforms those detections into physical expression compatible with the measurable phenomenon used to represent information in computer system 1100. Other external devices coupled to bus 1110, used primarily for interacting with humans, include a display device 1114, such as a cathode ray tube (CRT) or a liquid crystal display (LCD), or plasma screen or printer for presenting text or images, and a pointing device 1116, such as a mouse or a trackball or cursor direction keys, or motion sensor, for controlling a position of a small cursor image presented on the display 1114 and issuing commands associated with graphical elements presented on the display 1114. In some embodiments, for example, in embodiments in which the computer system 1100 performs all functions automatically without human input, one or more of external input device 1112, display device 1114 and pointing device 1116 is omitted.

In the illustrated embodiment, special purpose hardware, such as an application specific integrated circuit (ASIC) 1120, is coupled to bus 1110. The special purpose hardware is configured to perform operations not performed by processor 1102 quickly enough for special purposes. Examples of application specific ICs include graphics accelerator cards for generating images for display 1114, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1100 also includes one or more instances of a communications interface 1170 coupled to bus 1110. Communication interface 1170 provides a one-way or two-way communication coupling to a variety of external devices that operate with their own processors, such as printers, scanners and external disks. In general, the coupling is with a network link 1178 that is connected to a local network 1180 to which a variety of external devices with their own processors are connected. For example, communication interface 1170 may be a parallel port or a serial port or a universal serial bus (USB) port on a personal computer. In some embodiments, communications interface 1170 is an integrated services digital network (ISDN) card or a digital subscriber line (DSL) card or a telephone modem that provides an information communication connection to a corresponding type of telephone line. In some embodiments, a communication interface 1170 is a cable modem that converts signals on bus 1110 into signals for a communication connection over a coaxial cable or into optical signals for a communication connection over a fiber optic cable. As another example, communications interface 1170 may be a local area network (LAN) card to provide a data communication connection to a compatible LAN, such as Ethernet. Wireless links may also be implemented. For wireless links, the communications interface 1170 sends or receives or both sends and receives electrical, acoustic or electromagnetic signals, including infrared and optical signals, that carry information streams, such as digital data. For example, in wireless handheld devices, such as mobile telephones like cell phones, the communications interface 1170 includes a radio band electromagnetic transmitter and receiver called a radio transceiver. In certain embodiments, the communications interface 1170 enables connection to the communication network 125 for generating semantic 3D abstract representations.

The term computer-readable medium is used herein to refer to any medium that participates in providing information to processor 1102, including instructions for execution. Such a medium may take many forms, including, but not limited to, non-volatile media, volatile media and transmission media. Non-volatile media include, for example, optical or magnetic disks, such as storage device 1108. Volatile media include, for example, dynamic memory 1104. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1178 typically provides information communication using transmission media through one or more networks to other devices that use or process the information. For example, network link 1178 may provide a connection through local network 1180 to a host computer 1182 or to equipment 1184 operated by an Internet Service Provider (ISP). ISP equipment 1184 in turn provides data communication services through the public, world-wide packet-switching communication network of networks now commonly referred to as the Internet 1190.

A computer called a server host 1192 connected to the Internet hosts a process that provides a service in response to information received over the Internet. For example, server host 1192 hosts a process that provides information representing video data for presentation at display 1114. It is contemplated that the components of system can be deployed in various configurations within other computer systems, e.g., host 1182 and server 1192.

FIG. 12 illustrates a chip set 1200 upon which an embodiment of the invention (e.g., mapping platform 117, mobile agents 103, drone control platform 127, services platform129, services 131) may be implemented. Chip set 1200 is programmed to generate semantic 3D abstract representations as described herein and includes, for instance, the processor and memory components described with respect to FIG. 11 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1200 includes a communication mechanism such as a bus 1201 for passing information among the components of the chip set 1200. A processor 1203 has connectivity to the bus 1201 to execute instructions and process information stored in, for example, a memory 1205. The processor 1203 may include one or more processing cores with each core configured to perform independently. A multi-core processor enables multiprocessing within a single physical package. Examples of a multi-core processor include two, four, eight, or greater numbers of processing cores. Alternatively or in addition, the processor 1203 may include one or more microprocessors configured in tandem via the bus 1201 to enable independent execution of instructions, pipelining, and multithreading. The processor 1203 may also be accompanied with one or more specialized components to perform certain processing functions and tasks such as one or more digital signal processors (DSP) 1207, or one or more application-specific integrated circuits (ASIC) 1209. A DSP 1207 typically is configured to process real-world signals (e.g., sound) in real time independently of the processor 1203. Similarly, an ASIC 1209 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1203 and accompanying components have connectivity to the memory 1205 via the bus 1201. The memory 1205 includes both dynamic memory (e.g., RAM, magnetic disk, writable optical disk, etc.) and static memory (e.g., ROM, CD-ROM, etc.) for storing executable instructions that when executed perform the inventive steps described herein to generate semantic 3D abstract representations. The memory 1205 also stores the data associated with or generated by the execution of the inventive steps.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. An apparatus comprising means to perform:
process a first image to determine a first set of image coordinates corresponding to one or more first semantic features of one or more first objects;
process a second image to determine a second set of image coordinates corresponding to one or more second semantic features of one or more second objects;
determine an object size, an object pose, or a combination thereof based on the first set of image coordinates, the second set of image coordinates, and a camera pose change between the first image and the second image; and
provide the object size, the object pose, or a combination thereof as an output.

2. The apparatus of claim 1, wherein the apparatus is cased to further perform:
determine a consistency of the object size, the object pose, or a combination thereof with one or more geometric constraints; and
determine whether the one or more first objects and the one or more second objects are a same object or different objects based on the consistency.

3. The apparatus of claim 2, wherein the one or more geometric constraints include a maximum object size, a maximum distance from a camera location, or a combination thereof.

4. The apparatus of any of claims 1-3, wherein the apparatus is cased to further perform:
generate a three-dimensional map based on the output.

5. The apparatus of any of claims 1-4, wherein the one or more first semantic features, the one or more second semantic features, or a combination thereof include one or more boundaries of the one or more first objects or the one or more second objects.

6. The apparatus of any of claims 1-5, wherein the one or more first objects, the one or more second objects, or a combination thereof are one or more polyhedrons; and wherein the one or more first semantic features, the one or more second semantic features, or a combination thereof include one or more corners of one or more faces of the one or more polyhedrons.

7. The apparatus of any of claims 1-6, wherein the first image, the second image, or a combination thereof is processed using image segmentation that is trained to segment a first object class, and wherein the output is used to generate an initial map of objects in the first object class.

8. The apparatus of claim 7, wherein the apparatus is caused to further perform:
use the initial map of objects in the first object class to semantically localize other objects in a second object class segmented by the image segmentation; and
update the initial map to generate an enhanced map including the other objects in the second object class.

9. The apparatus of any of claims 1-8, wherein the apparatus is further caused to perform:
detect one or more known objects in the first image, the second image, or a combination thereof; and
determine a first camera pose of the first image, a second camera pose of the second image, or a combination thereof by using semantic visual localization based on the one or more detected known objects,
wherein the camera pose change is based on a first camera pose, the second camera pose, or a combination thereof.

10. The apparatus of any of claims 1-9, wherein the output is enhanced with additional object metadata, visual data, or a combination thereof.

11. The apparatus of claim 10, wherein the additional object metadata, the visual data, or a combination thereof is used to render a representation of the one or more first objects, the one or more second objects, or a combination thereof.

12. A computer-implemented method comprising:
processing a first image to determine a first set of image coordinates corresponding to one or more first semantic features of one or more first objects;
processing a second image to determine a second set of image coordinates corresponding to one or more second semantic features of one or more second objects;
determining an object size, an object pose, or a combination thereof based on the first set of image coordinates, the second set of image coordinates, and a camera pose change between the first image and the second image; and
providing the object size, the object pose, or a combination thereof as an output.

13. The computer-implemented method of claim 12, further comprising:
determining a consistency of the object size, the object pose, or a combination thereof with one or more geometric constraints; and
determining whether the one or more first objects and the one or more second objects are a same object or different objects based on the consistency.

14. The computer-implemented method of claim 12 or 13, wherein the one or more geometric constraints include a maximum object size, a maximum distance from a camera location, or a combination thereof.

15. A non-transitory computer-readable storage medium, carrying one or more sequences of one or more instructions which, when executed by one or more processors, cause an apparatus to at least perform the following steps:
processing a first image to determine a first set of image coordinates corresponding to one or more first semantic features of one or more first objects;
processing a second image to determine a second set of image coordinates corresponding to one or more second semantic features of one or more second objects;
determining an object size, an object pose, or a combination thereof based on the first set of image coordinates, the second set of image coordinates, and a camera pose change between the first image and the second image; and
providing the object size, the object pose, or a combination thereof as an output.
